# EUROPEAN PATENT APPLICATION

(11) **EP 4 712 226 A1**
(43) Date of publication of application: **18.03.2026**
(21) Application number: 25200150.8
(22) Date of filing: 04.09.2025
(51) Int. Cl.: H01M 50/148, H01M 50/172, H01M 50/186, H01M 50/188, H01M 50/552, H01M 50/553, H01M 50/562, H01M 50/564

(54) **CONDUCTIVE MODULE, COVER PLATE ASSEMBLY, AND BATTERY CELL**

(30) Priority: 06.09.2024 CN 202411252080; 06.09.2024 CN 202422195822 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); ZHENG, Xu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN)
(74) Representative: Berggren Oy

(57) **Abstract**

The present disclosure provides a conductive module (10a), a cover plate assembly (100), and a battery cell (1000). The conductive module (10a) includes a pole (101) and a terminal pressing block (102). The pole (101) includes a first-metal post (1) and a second-metal layer (2) bonded on a surface of the first-metal post (1). The second-metal layer (2) includes a clamping portion (2a). The terminal pressing block (102) is connected to the pole (101). The clamping portion (2a) is clamped between the first-metal post (1) and the terminal pressing block (102), thereby reducing a risk that the second-metal layer (2) is separated from the first-metal post (1).

## Description

### TECHNICAL FIELD

The present disclosure relates to the field of battery technologies, and in particular, to a conductive module, a cover plate assembly, and a battery cell.

### BACKGROUND

Poles are important components for connecting inside and outside of cells (also called battery cells). Generally, one end of each pole is connected to a circuit outside the cell, e.g., connected to a module busbar through a terminal pressing block, and another end of each pole is connected to an internal circuit of the cell, e.g., connected to a tab of an electrode assembly through a current collector. At present, most of the poles are made of single metal materials, e.g., a material of a positive pole is aluminum material, and a material of a negative pole is copper material. However, the poles made of the single metal materials are likely to bring problems of welding difficulties. Taking the negative pole being a pure copper pole as an example, when the pure copper pole and the terminal pressing block are welded by laser, in order to reduce costs and a weight of the cell, a material of the terminal pressing block is generally aluminum material. Since melting points of copper and aluminum are different, laser welding is easy to fail, resulting in cracking.

In order to reduce the welding difficulties, a composite pole is designed in the related art. The composite pole includes two metal layers arranged up and down and made of different materials. Different metal layers are bonded together by friction welding or stamping. Taking the composite pole being the negative pole as an example, the composite pole includes an aluminum layer and a copper layer. However, a bonding strength between different metal layers in the composite pole is limited., causing the metal layers connected to an electrode assembly to easily fall off and drop into the cell, resulting in the failure of the cell.

### SUMMARY

Embodiments of the present disclosure provide a conductive module, a cover plate assembly, and a battery cell, so as to solve a technical problem that metal layers in a composite pole are easy to fall off.

In a first aspect, the embodiments of the present disclosure provide a conductive module, including:
a pole including a first-metal post and a second-metal layer bonded to a surface of the first-metal post, where the second-metal layer includes a clamping portion; and
a terminal pressing block connected to the pole, where the clamping portion is clamped between the first-metal post and the terminal pressing block.

In an embodiment, the terminal pressing block is provided with a through hole, and the terminal pressing block is sleeved on the pole through the through hole.

In an embodiment, the through hole is in interference fit with the pole.

In an embodiment, the terminal pressing block is fixed to the pole by press riveting.

In an embodiment, the clamping portion is clamped between at least a part of a hole wall of the through hole and the first-metal post.

In an embodiment, a part of the hole wall of the through hole is in direct contact with the first-metal post.

In an embodiment, a hole wall of the through hole is welded to the pole.

In an embodiment, the second-metal layer includes a support surface, and the terminal pressing block is supported on the support surface.

In an embodiment, the support surface is an inclined surface. Along a direction away from a first end of the first-metal post, the inclined surface gradually approaches an outer side surface of the first-metal post from an outer side surface of the second-metal layer.

In an embodiment, the inclined surface is an inclined flat surface, and an included angle between the inclined flat surface and the outer side surface of the second-metal layer ranges from 110° to 130°.

In an embodiment, the support surface is a step surface, the step surface includes at least one first sub-step surface and at least one second sub-step surface connected in sequence.

In an embodiment, a height of the second sub-step surface is greater than or equal to 0.2 mm along an axial direction of the pole, and/or a width of the first sub-step surface is greater than or equal to 0.2 mm along a radial direction of the pole.

In an embodiment, along a radial direction of the pole, a width of the support surface is greater than or equal to 0.3 mm and less than or equal to an average thickness of the second-metal layer.

In an embodiment, a hole wall of the through hole is formed with a fitting surface matching the support surface.

In an embodiment, the support surface is formed on the clamping portion.

In an embodiment, the terminal pressing block is sleeved on the first-metal post through the through hole.

In an embodiment, the first-metal post is radially protruded to form a boss. The boss is configured to support the terminal pressing block. The second-metal layer extends to upper and lower sides of the boss. The clamping portion is clamped between the boss and the terminal pressing block.

In an embodiment, an end portion of the second-metal layer is embedded in the first-metal post.

In an embodiment, an end portion of the second-metal layer is the clamping portion.

In an embodiment, a material of the terminal pressing block is the same as a material of the first-metal post; and/or, the first-metal post is an aluminum post, and the second-metal layer is a copper layer; and/or an average thickness of the second-metal layer is less than or equal to 3 mm.

In an embodiment, the first-metal post includes a first end and a second end opposite to each other. The second-metal layer wraps a surface of the first end and extends toward the second end. A portion of the second-metal layer corresponding to the first end is configured to be connected to an electrode assembly. The second end is connected to the terminal pressing block.

In an embodiment, the clamping portion is provided to be ring-shaped, and the clamping portion is connected to a peripheral portion of the first-metal post.

According to a second aspect, the embodiments of the present disclosure provide a cover plate assembly including a cover plate and the aforementioned conductive module. The pole passes through the cover plate, and the terminal pressing block is located on one side of the cover plate.

In an embodiment, the cover plate assembly further includes a current collector, and the current collector is located on a side of the cover plate away from the terminal pressing block and welded to the pole. The cover plate includes a cover plate body, a first insulating member disposed between the terminal pressing block and the cover plate body, and a second insulating member disposed between the cover plate body and the current collector. And/or, the cover plate assembly further includes a sealing member disposed between the cover plate and the pole.

According to a third aspect, the embodiments of the present disclosure provide a battery cell including: a casing including an accommodating cavity; an electrode assembly disposed in the accommodating cavity, where the electrode assembly includes a tab; and the aforementioned cover plate assembly, where the cover plate assembly is connected to the casing and closes an opening of the accommodating cavity, and the pole is connected to the tab.

Beneficial effects of the embodiments of the present disclosure are as follows.

In the conductive module of the embodiments of the present disclosure, the pole is provided to include the first-metal post and the second-metal layer, the pole is connected to the terminal pressing block, and a portion (i.e., the clamping portion) of the second-metal layer is clamped between the first-metal post and the terminal pressing block. On one hand, the first-metal post and the terminal pressing block limit the clamping portion to prevent the second-metal layer from being separated from the first-metal post. On the other hand, since metals have ductility, when the first-metal post and the terminal pressing block clamp the clamping portion, a first metal and a second metal intrude into each other, so that the second-metal layer is more tightly bonded to the first-metal post, and the double action jointly reduces a risk that the second-metal layer is separated from the first-metal post.

### BRIEF DESCRIPTION OF THE DRAWINGS

In order to provide clearer explanations of the technical solutions in the embodiments of the present disclosure, it is to be noted that the accompanying drawings in the following description of the embodiments are merely some of embodiments of the present disclosure, and that other accompanying drawings may be obtained by the skilled person in the art without involving creative labor.
FIG. 1 is a schematic cross-sectional structural view of a conductive module according to the embodiments of the present disclosure.
FIG. 2 is a schematic cross-sectional structural view of a pole in FIG. 1.
FIG. 3 is an enlarged view of a portion C in FIG. 2.
FIG. 4 is a schematic cross-sectional structural view of a terminal pressing block in FIG. 1.
FIG. 5 is a schematic cross-sectional structural view of another pole of a conductive module according to the embodiments of the present disclosure.
FIG. 6 is an enlarged view of a portion B in FIG. 2.
FIG. 7 is a schematic cross-sectional structural view of yet another pole of a conductive module according to the embodiments of the present disclosure.
FIG. 8 is a schematic cross-sectional structural view of the pole in FIG. 7.
FIG. 9 is a schematic cross-sectional structural view of another conductive module according to the embodiments of the present disclosure.
FIG. 10 is a schematic cross-sectional structural view of yet another conductive module according to the embodiments of the present disclosure.
FIG. 11 is a schematic exploded structural view of a cover plate assembly according to the embodiments of the present disclosure.
FIG. 12 is a schematic exploded structural view of a cover plate assembly according to the embodiments of the present disclosure.
FIG. 13 is a schematic cross-sectional structural view of a battery cell according to the embodiments of the present disclosure.

### Reference numerals are as follows:

10a, conductive module;
101, pole;
1, first-metal post; 11, first end; 12, second end; 13, boss;
2, second-metal layer;
20, end portion;
2a, clamping portion;
203, support surface;
2031, inclined surface;
2032, step surface; 20321, first sub-step surface; 20322, second sub-step surface;
102, terminal pressing block; 1021, through hole; 1022, hole wall; 1023, fitting surface;
100, cover plate assembly;
110, cover plate; 111, cover plate body; 112, first insulating member; 113, second insulating member; 114, mounting hole; 115, liquid injection hole;
120, current collector; 1201, current collector body; 1202, connecting sheet;
130, sealing member;
140, explosion-proof valve;
1000, battery cell;
1100, casing; 1110, accommodating cavity;
1200, electrode assembly; 1210, tab.

### DETAILED DESCRIPTION

The technical solutions in the embodiments of the present disclosure will be described clearly and completely hereafter with reference to accompanying drawings in the embodiments of the present disclosure. Apparently, the described embodiments are only a part of but not all embodiments of the present disclosure. Based on the embodiments of the present disclosure, all other embodiments obtained by those skilled in the art without involving any creative labor are within the scope of the present disclosure.

Furthermore, it should be understood that the specific embodiments described herein are only for illustrating and explaining the present disclosure and are not intended to limit the present disclosure. In the application, unless otherwise specified, the directional words used such as "upper" and "lower" usually refer to the upper and lower position of the device in actual use or working state, specifically to the direction of the drawing in the drawings, while "inside" and "outside" are understood referring to the contour lines of the device.

The terms "first" and "second" are only used for descriptive purposes and cannot be interpreted as indicating or implying the relative importance or implicitly indicating the quantity of indicated technical features. Thus, features defined by first and second may explicitly or implicitly include one or more of the features. In the description of the present disclosure, multiple means two or more, unless otherwise specifically defined.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections or communicate with each other; may also be direct connections or indirect connections via intervening structures; may also be inner communications of two elements or interaction relationships between two elements, may also be direct connections or indirect connections via intervening structures; may also be inner communications of two elements or interaction relationships between two elements. Those ordinary skilled in the art can understand the specific meanings of the above terms in the present disclosure according to specific situations.

The terms "include", "comprise", or any other variation thereof are intended to cover a non-exclusive inclusion, such that a process, method, article, or device that includes a list of elements includes not only those elements but also other elements not expressly listed, or elements inherent to such a process, method, article, or device. An element proceeded by "comprises a..." does not, without more constraints, preclude the existence of additional identical elements in the process, method, article, or device that comprises the element.

**In** the descriptions of the embodiments of the present disclosure, words such as "example" or "for example" are used to indicate examples, descriptions, or descriptions. Any embodiment or design scheme described as an "example" or "for example" in the embodiments of the present disclosure is not explained as being more preferred or having more advantages than another embodiment or design scheme. The use of words such as "example" or "e.g." is intended to present a relative concept in a clear manner.

For ease of understanding the solutions of the present disclosure, spline curves and arrows that are used as labels in the accompanying drawings are described herein: a component indicated by a spline curve without an arrow is a solid component, that is, a component with a solid structure; and a component indicated by a spline curve with an arrow is a phantom component, i.e., a component without a solid structure.

Since a composite pole includes metal layers of different materials, and thermal expansion coefficients of different metals are generally different, a bonding strength between the metal layers in the composite pole is reduced in a high-temperature working environment, and the metal layers are easily separated from each other and fall off. Moreover, the bonding strength between the metal layers in the composite pole is affected by a bonding area. **In** a case where a diameter of the composite pole is relatively small, the metal layers in the composite pole also are easy to fall off.

In view of the problem that the metal layers of a composite pole are easy to fall off, resulting in the failure of a cell, the embodiments of the present disclosure provide a conductive module, a cover plate assembly, and a battery cell.

According to a first aspect, the embodiments of the present disclosure provide a conductive module. The conductive module is used to connect an internal circuit of a battery cell to a circuit (an external circuit for short) outside the battery cell, so that the battery cell is connected to the external circuit to realize that the external circuit supplies power to the battery cell (i.e., the battery cell is charged), or the battery cell supplies power to the external circuit (i.e., the battery cell is discharged). **In** detail, the conductive module may be used to be assembled to a cover plate of the battery cell.

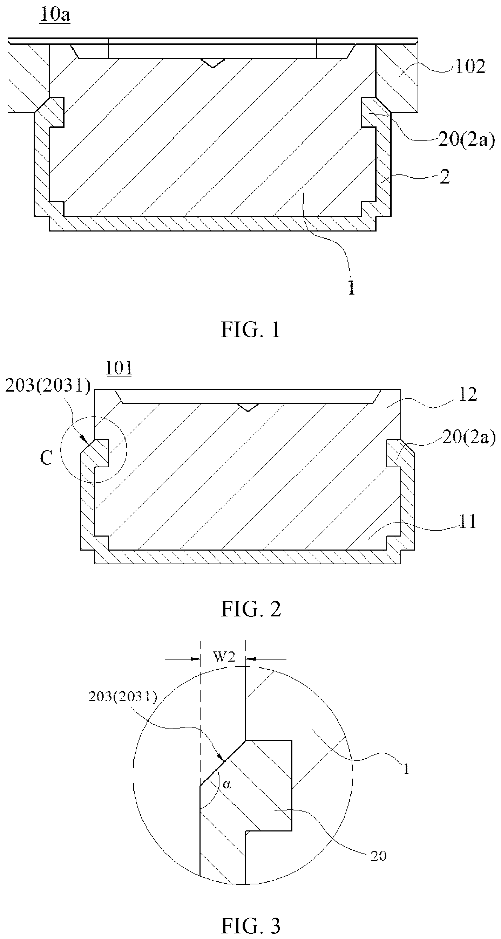

Specifically, referring to FIGs. 1 to 13, the conductive module 10a includes a pole 101 and a terminal pressing block 102. The terminal pressing block 102 is connected to the pole 101. The pole 101 includes a first-metal post 1 and a second-metal layer 2. A surface of the second-metal layer 2 and a surface of the first-metal post 1 are bonded together. The second-metal layer 2 includes a clamping portion 2a. The clamping portion 2a is clamped between the first-metal post 1 and the terminal pressing block 102.

The pole 101 is a component in the battery cell 1000. The pole 101 specifically refers to a conductive structure in the battery cell 1000 for connecting with the electrode assembly 1200. As an example, the pole 101 is connected to a tab 1210 of an electrode assembly 1200. The pole 101 may be directly connected to the tab 1210, or may be connected to the tab 1210 through other components (e.g., a current collector 120). The pole 101 is generally partially located inside the battery cell 1000, and partially located outside the battery cell 1000.

The terminal pressing block 102 is also a component in the battery cell 1000. The terminal pressing block 102 is located outside the battery cell 1000. The terminal pressing block 102 is connected to the pole 101, and the terminal pressing block 102 is further configured to be electrically connected to an external structure. As an example, the terminal pressing block 102 is connected to a module busbar.

Herein, the terminal pressing block 102 is connected to the pole 101, which may be that the terminal pressing block 102 is welded to the pole 101, or the terminal pressing block 102 is in interference fit with the pole 101 for connection. Certainly, the terminal pressing block 102 and the pole 101 may also be connected in other specific manners.

The pole 101 includes the first-metal post 1 and the second-metal layer 2. It may be understood that the first-metal post 1 is a pole structure, and a material of the first-metal post 1 includes a first metal. The second-metal layer 2 is a layered structure, and a material of the second-metal layer 2 includes a second metal. Herein, the second metal and the first metal are different metals.

The surface of the second-metal layer 2 and the surface of the first-metal post 1 are bonded together, which means that the second-metal layer 2 is located on an outer surface of the first-metal post 1, and the second-metal layer 2 is further bonded to the first-metal post 1. The "bond" herein means that the second-metal layer 2 and the first-metal post 1 are not separated simply under the action of gravity. As an example, the second-metal layer 2 and the first-metal post 1 may be bonded together by cold heading.

The second-metal layer 2 includes the clamping portion 2a. Generally, a part of the second-metal layer 2 is formed as a clamping portion 2a to ensure that the second-metal layer 2 on the pole 101 may be connected to the electrode assembly 1200. Specifically, the clamping portion 2a is clamped between the first-metal post 1 and the terminal pressing block 102. That is, a part of the second-metal layer 2 is clamped between the first-metal post 1 and the terminal pressing block 102.

In the conductive module 10a provided by the embodiments of the present disclosure, the pole 101 is disposed to include the first-metal post 1 and the second-metal layer 2, the pole 101 is connected to the terminal pressing block 102, and a portion (i.e., the clamping portion 2a) of the second-metal layer 2 is clamped between the first-metal post 1 and the terminal pressing block 102. On one hand, the first-metal post 1 and the terminal pressing block 102 limit the clamping portion 2a to prevent the second-metal layer 2 from being separated from the first-metal post 1. On the other hand, since metals have ductility, when the first-metal post 1 and the terminal pressing block 102 clamp the clamping portion 2a, the first metal and the second metal intrude into each other, so that the second-metal layer 2 is more tightly bonded to the first-metal post 1, and the double action jointly reduces a risk that the second-metal layer 2 is separated from the first-metal post 1.

In some embodiments, the pole 101 is a negative pole. The first metal is aluminum, i.e., the first-metal post 1 is an aluminum post. The second metal is copper, i.e., the second-metal layer 2 is a copper layer. Compared with the negative pole made of pure copper, the negative pole is provided as a structure including the aluminum pole and the copper layer, so that costs of the negative pole may be effectively reduced.

In some embodiments, an average thickness D1 of the second-metal layer 2 is less than or equal to 3 mm. The second-metal layer 2 is made thinner, so that production costs of the pole 101 may be effectively reduced. Especially when the first-metal post 1 is the aluminum post and the second-metal layer 2 is the copper layer, the use of more expensive copper is reduced, and the costs of the pole 101 are effectively reduced while a weight of the pole 101 is also reduced. As an example, the average thickness D1 of the second-metal layer 2 is 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm.

In some embodiments, a material of the terminal pressing block 102 is the same as a material of the first-metal post 1. By designing the terminal pressing block 102 and the first-metal post 1 to be made of the same material, the terminal pressing block 102 and the first-metal post 1 may be partially melted at a same temperature to realize welding. Meanwhile, the same material may reduce a risk of cracking of a welding position between the terminal pressing block 102 and the first-metal post 1 due to thermal expansion. As an example, in a case where the pole 101 includes the aluminum post and the copper layer, the terminal pressing block 102 is an aluminum terminal pressing block 102. The aluminum post is welded to the aluminum terminal pressing block 102, thereby reducing welding difficulty and improving welding reliability.

In some embodiments, in a case where the pole 101 is cut along a radial direction of the pole 101, a cross-sectional shape of the pole 101 may be one of square, circular, hexagonal, and racetrack.

In some embodiments, referring to FIGs. 1 to 10, the first-metal post 1 includes two opposite ends, namely a first end 11 and a second end 12. The second-metal layer 2 wraps a surface of the first end 11, and the second-metal layer 2 extends from the surface of the first end 11 to the second end 12. A portion of the second-metal layer 2 in the pole 101 corresponding to the first end 11 is connected to the tab 1210 connected to the electrode assembly 1200, and the second end 12 is connected to the terminal pressing block 102. Herein, the second-metal layer 2 extends from the surface of the first end 11 to the second end 12. Specifically, an end portion 20 of the second-metal layer 2 extends to the second end 12. The end portion 20 of the second-metal layer 2 may extend to the second end 12, or the end portion 20 of the second-metal layer 2 may be located between the first end 11 and the second end 12. Optionally, the end portion 20 of the second-metal layer 2 extends to the second end 12, but the second-metal layer 2 does not completely wrap the second end 12. That is, the second end 12 is at least partially exposed outside the second-metal layer 2 to facilitate direct connection between the second end 12 and the terminal pressing block 102, for example, by welding. Herein, the end portion 20 of the second-metal layer 2 refers to a portion at an edge of the second-metal layer 2. Compared with a form in which the second-metal layer 2 is disposed only on an end surface of one end of the first-metal post 1, the second-metal layer 2 extends from the first end 11 to the second end 12 of the first-metal post 1, so that a bonding area between the second-metal layer 2 and the first-metal post 1 may be effectively increased, a risk of the second-metal layer 2 falling off may be reduced, and an overcurrent capability of the pole 101 may be improved.

In a case where the conductive module 10a is applied to the battery cell 1000, the first end 11 of the first-metal post 1 faces an inside of the battery cell 1000, and the second end 12 faces an outside of the battery cell 1000. The second-metal layer 2 wraps the first end 11 of the first-metal post 1 and extends from the first end 11 to the second end 12, so that the second-metal layer 2 may also serve as a protective layer to separate the first end 11 of the first-metal post 1 from an electrolyte in the battery cell 1000, thereby reducing a risk of the first end 11 being corroded by the electrolyte.

In some embodiments, referring to FIGs. 1 to 4, the terminal pressing block 102 is provided with a through hole 1021. The terminal pressing block 102 is sleeved on the pole 101 through the through hole 1021. That is, the pole 101 passes through the terminal pressing block 102 through the through hole 1021. As an example, one end of the pole 101(specifically, the first end 11 of the first-metal post 1) extends into the through hole 1021, and the terminal pressing block 102 is sleeved on one end of the pole 101. By sleeving the terminal pressing block 102 on the pole 101, a height of the conductive module 10a may be appropriately reduced, and the terminal pressing block 102 may also limit the pole 101.

In some embodiments, the through hole 1021 is in interference fit with the pole 101. In this way, the tight fit between the terminal pressing block 102 and the pole 101 may be realized, so as to improve the thrust resistance and the torsion resistance of the pole 101. Furthermore, there is no need to introduce other connecting components in the interference fit mode, the structure is simple, and the reliability of the connection mode is high.

In some embodiments, the terminal pressing block 102 is press-riveted with the pole 101. As an example, assembly processes include: inserting one end of the pole 101 into the through hole 1021 of the terminal pressing block 102, where the pole 101 and the through hole 1021 may be in clearance fit; and then riveting the pole 101 and the through hole 1021 together through a press-riveting fixing process. In detail, during the process of press-riveting fixing, a press-riveting machine may be used to squeeze the pole 101 along the axial direction of the pole 101. The pole 101 will deform during the process of pressing, the pole 101 will contract in the axial direction, and the pole 101 will expand in the radial direction. At this time, a part of the pole 101 located in the through hole 1021 will fill the gap between the pole 101 and the through hole 1021 and squeeze the hole wall 1022 of the through hole 1021 to realize the interference fit between the pole 101 and the through hole 1021. A part of the pole 101 located outside the through hole 1021 will form a stopping step that is in stopping fit with the terminal pressing block 102. That is, the pole 101 is equivalent to a rivet, which improves the reliability of the connection between the terminal pressing block 102 and the pole 101 and reduces the risk of the pole 101 separating from the terminal pressing block 102. Optionally, during the press-riveting fixing process, the terminal pressing block 102 is fixed by a clamp, and the terminal pressing block 102 cannot move.

In some embodiments, referring to FIGs. 1 to 4, the clamping portion 2a is clamped between at least a part of the hole wall 1022 of the through hole 1021 and the first-metal post 1. That is, the clamping portion 2a is located between the hole wall 1022 of the through hole 1021 and the first-metal post 1, and an inner surface of the hole wall 1022 of the through hole 1021 may be partially or completely covered by the clamping portion 2a. That is, the inner surface of the hole wall 1022 of the through hole 1021 and an outer surface of the first-metal post 1 may be partially or completely separated by the clamping portion 2a. In other words, referring to FIG. 1, along the axial direction of the pole 101, the highest position of the clamping portion 2a is higher than the lowest position of the hole wall 1022 of the through hole 1021. The clamping portion 2a is disposed between the hole wall 1022 of the through hole 1021 and the first-metal post 1, and when the through hole 1021 is in interference fit with the pole 101, the first metal in the first-metal post 1 and the second metal in the clamping portion 2a may be caused to intrude into each other, so that a bonding interface between the first-metal post 1 and the clamping portion 2a is deformed, and a deformation interlocking bonding interface is formed. In addition, the clamping portion 2a may be further deformed and extended under the action of the clamping force between the hole wall 1022 and the pole 101, and the bonding area between the second-metal layer 2 and the first-metal post 1 may also be increased. In addition, in a case where the terminal pressing block 102 is also a metal member, when the through hole 1021 is in interference fit with the pole 101, the metal in the terminal pressing block 102 may also intrude into the clamping portion 2a, thereby forming a deformation interlocking bonding interface between the hole wall 1022 of the through hole 1021 and the clamping portion 2a, and improving the bonding area and bonding strength. Therefore, by increasing the bonding area between the second-metal layer 2 and the first-metal post 1 and/or the terminal pressing block 102, not only the bonding strength of the bonding surface may be improved, and the risk of the second-metal layer 2 being separated from the first-metal post 1 may be reduced, but also the overcurrent capability of the bonding surface may be improved, and the overcurrent capability of the conductive module 10a may be improved.

In some embodiments, referring to FIGs. 1 to 4, the hole wall 1022 of a part of the through hole 1021 is in direct contact with the first-metal post 1, i.e., the inner surface of the hole wall 1022 of the through hole 1021 is only partially covered by the clamping portion 2a. A part of the hole wall 1022 of the through hole 1021 is remained to be in direct contact with the first-metal post 1, which facilitates welding the hole wall 1022 of the through hole 1021 to the first-metal post 1 together. Especially, when the material of the terminal pressing block 102 is the same as the material of the first-metal post 1, the difficulty of welding may be effectively reduced. As an example, the second end 12 of the first-metal post 1 extends into the through hole 1021, and a part of the hole wall 1022 of the through hole 1021 is in direct contact with a part of a side surface of the second end 12, specifically, a part of a side surface of the second end 12 close to an end surface of the second end 12.

In some embodiments, the terminal pressing block 102 is sleeved on the first-metal post 1 through the through hole 1021. A part of the hole wall 1022 of the through hole 1021 may be in direct contact with the first-metal post 1, or the entire hole wall 1022 of the through hole 1021 may be in direct contact with the first-metal post 1, i.e., there is no second-metal layer 2 between the hole wall 1022 of the through hole 1021 and the first-metal post 1. The terminal pressing block 102 is sleeved on the first-metal post 1 through the through hole 1021, which facilitates welding the terminal pressing block 102 and the first-metal post 1, e.g., by laser welding.

In some embodiments, the hole wall 1022 of the through hole 1021 is welded to the pole 101. The reliability of the connection between the terminal pressing block 102 and the pole 101 may be effectively ensured by welding. As an example, the hole wall 1022 of the through hole 1021 and the pole 101 are welded together by laser welding. Optionally, the hole wall 1022 of the through hole 1021 and the first-metal post 1 of the pole 101 are directly welded together.

In some embodiments, the hole wall 1022 of the through hole 1021 is welded to the pole 101, and the through hole 1021 is in interference fit with the pole 101. The dual connection improves connection reliability.

In some embodiments, referring to FIGs. 1 to 8, the second-metal layer 2 includes a support surface 203, and the terminal pressing block 102 is supported on the support surface 203. Specifically, the support surface 203 is connected to an outer side surface of the second-metal layer 2. An outer surface of the second-metal layer 2 includes the outer side surface of the second-metal layer 2 and the support surface 203, i.e., the support surface 203 is a part of the outer surface of the second-metal layer 2. The terminal pressing block 102 is sleeved on the pole 101 through the through hole 1021. The terminal pressing block 102 is supported on the support surface 203. When welding is performed between the hole wall 1022 of the through hole 1021 and the pole 101 by laser welding, if a gap is provided between the hole wall 1022 of the through hole 1021 and the pole 101 before welding, the support surface 203 may be formed as a bottom surface of the gap and block the laser during welding, thereby reducing a risk of laser penetration. Optionally, the support surface 203 may be at least one of a step surface 2032, a flat surface, and an arc surface.

in some embodiments, referring to FIGs. 1 to 4, the support surface 203 is an inclined surface 2031. Along a direction away from the first end 11 of the first-metal post 1, the inclined surface 2031 gradually approaches an outer side surface of the first-metal post 1 from the outer side surface of the second-metal layer 2. The inclined surface 2031 may be an inclined flat surface or an inclined curved surface. As an example, the inclined curved surface is an inclined arc surface. The inclined arc surface herein may be an arc surface arched in a direction away from the second-metal layer 2, or the inclined arc surface may be an arc surface sunk in a direction close to the second-metal layer 2. The support surface 203 is provided as the inclined surface 2031, and in the direction away from the first end 11, the inclined surface 2031 gradually approaches the first-metal post 1. In this way, when the terminal pressing block 102 is supported on the inclined surface 2031, the terminal pressing block 102 will generate a partial pressure inward along the radial direction of the pole 101 on the inclined surface 2031, so that a portion of the second-metal layer 2 corresponding to the inclined surface 2031 is more attached to the first-metal post 1, thereby reducing the risk of the second-metal layer 2 being separated.

In some embodiments, referring to FIG. 3, the inclined surface 2031 is an inclined flat surface, and an included angle α between the inclined flat surface and the outer side surface of the second-metal layer 2 ranges from 110° to 130°. The included angle α is within the above-mentioned range, so that a deformation interlocking bonding interface is formed between the second-metal layer 2 and the first-metal post 1 under the action of the radially inward partial pressure applied by the terminal pressing block 102, thereby improving a bonding effect between the second-metal layer 2 and the first-metal post 1. As an example, the included angle α is 110°, 115°, 120°, 125°, or 130°.

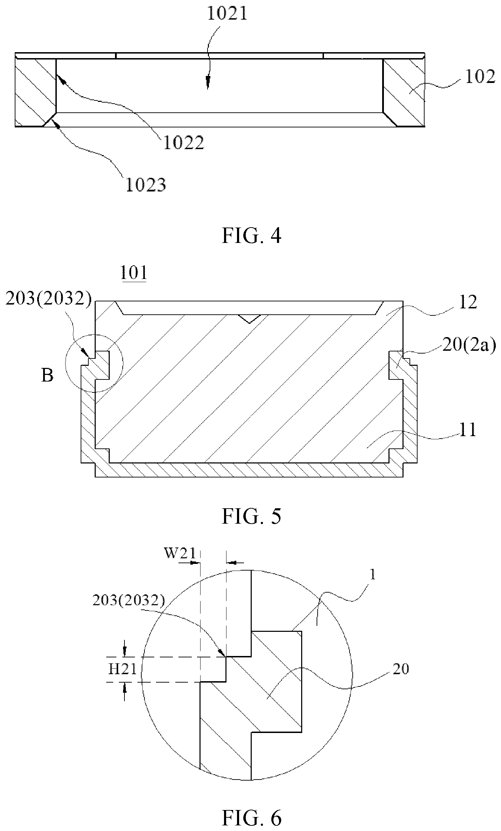

in some embodiments, referring to FIGs. 5 to 8, the support surface 203 is a step surface 2032. The step surface 2032 includes a second sub-step surface 20322 and a first sub-step surface 20321 connected in sequence. Herein, the first sub-step surface 20321 refers to a surface extending along a first direction, and the second sub-step surface 20322 refers to a surface extending in a second direction. The first direction intersects the second direction. Optionally, the first direction is perpendicular to the second direction. As an example, the first direction is a radial direction of the pole 101, and the second direction is an axial direction of the pole 101. Optionally, both the second sub-step surface 20322 and the first sub-step surface 20321 are flat surfaces. A number of the second sub-step surfaces 20322 is greater than or equal to 1, and a number of the first sub-step surfaces 20321 is greater than or equal to 1. In other words, the number of the second sub-step surfaces 20322 may be one or multiple, and the number of the first sub-step surfaces 20321 may also be one or multiple. The term "multiple" refers to two or more. **In** a case where the number of the second sub-step surface 20322 is one and the number of the first sub-step surface 20321 is also one, the obtained step surface 2032 is a single-stage step surface 2032. **In** a case where the number of at least one of the second sub-step surface 20322 and the first sub-step surface 20321 is multiple, the obtained step surface 2032 is a multi-stage step surface 2032. As an example, the number of the second sub-step surfaces 20322 is two, and the number of the first sub-step surfaces 20321 is also two. **In** the single-stage step surface 2032, the second sub-step surface 20322 and the first sub-step surface 20321 are connected in sequence. **In** the multi-stage step surface 2032, the second sub-step surfaces 20322 and the first sub-step surfaces 20321 are alternately connected in sequence. The support surface 203 is provided as the step surface 2032, the stability of the fitting between the terminal pressing block 102 and the pole 101 may be improved, and the risk of laser penetration during laser welding may be reduced.

**In** some embodiments, referring to FIG. 6, along the axial direction of the pole 101, a height H21 of the second sub-step surface 20322 is greater than or equal to 0.2 mm. The height H21 of the second sub-step surface 20322 is not too small, otherwise the step surface 2032 is difficult to form and the step surface 2032 is easily damaged. As an example, a width H21 of the second sub-step surface 20322 is 0.2 mm, 0.3 mm, 0.4 mm, 0.5 mm, 0.6 mm, or 0.7 mm.

**In** some embodiments, referring to FIG. 6, along the radial direction of the pole 101, a width W21 of the first sub-step surface 20321 is greater than or equal to 0.2 mm. The width W21 of the first sub-step surface 20321 is not too small, otherwise the step surface 2032 is difficult to form and the step surface 2032 is easily damaged. As an example, the width W21 of the first sub-step surface 20321 is 0.2 mm, 0.3 mm, 0.4 mm, 0.5 mm, 0.6 mm, or 0.7 mm.

**In** some embodiments, referring to FIG. 3, along the radial direction of the pole 101, a width W2 of the support surface 203 is greater than or equal to 0.3 mm and less than or equal to the average thickness D1 of the second-metal layer 2. **In** the radial direction of the pole 101, the maximum value of the width W2 of the support surface 203 is limited by the average thickness D1 of the second-metal layer 2. However, the minimum value of the width W2 of the support surface 203 is related to the design of the support surface 203, and the minimum value should not be too small, otherwise, the support effect of the support surface 203 on the terminal pressing block 102 is affected, thereby affecting the effect of the second-metal layer 2 blocking the laser during laser welding. As an example, the width W2 of the support surface 203 is 0.3 mm, 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm.

In some embodiments, referring to FIG. 4, the hole wall 1022 of the through hole 1021 is provided with a fitting surface 1023 matching the support surface 203. In a case where the support surface 203 is the inclined surface 2031, the fitting surface 1023 is the inclined fitting surface 1023 matching the inclined surface 2031. In a case where the support surface 203 is the step surface 2032, the fitting surface 1023 is the step fitting surface 1023 matching the step surface 2032. By using the complementarity between the support surface 203 and the fitting surface 1023, the stability of the fitting between the terminal pressing block 102 and the pole 101 is effectively improved, and the risk of laser penetration during laser welding is reduced. In addition, in the case where the support surface 203 is an inclined flat surface, the inclined flat surface matches the fitting surface 1023, which may also play a guiding role to further improve the reliability of the fitting between the terminal pressing block 102 and the pole 101.

In some embodiments, referring to FIG. 1, the support surface 203 is formed on the clamping portion 2a. That is, the clamping portion 2a is not only clamped between the first-metal post 1 and the terminal pressing block 102, but also supports the terminal pressing block 102, so that a structure of the pole 101 is simpler. In particular, when the support surface is the inclined surface 2031, the partial pressure generated by the terminal pressing block 102 on the inclined surface 2031 may act together with a clamping force between the terminal pressing block 102 and the first-metal post 1 to promote the formation of the deformation interlocking bonding surface between the clamping portion 2a and the first-metal post 1, thereby reducing the risk of the second-metal layer 2 being separated.

In some embodiments, referring to FIGs. 1 to 8, the end portion 20 of the second-metal layer 2 is the clamping portion 2a. That is, the end portion 20 of the second-metal layer 2 is clamped between the terminal pressing block 102 and the first-metal post 1. Since the end portion 20 of the second-metal layer 2 is the edge of the second-metal layer 2, when the end portion 20 of the second-metal layer 2 is deformed due to clamping, the end portion 20 of the second-metal layer 2 may continue to extend to a side away from a body of the second-metal layer 2, thereby increasing the bonding area of the second-metal layer 2. In addition, since the bonding between the end portion 20 of the second-metal layer 2 and the first-metal post 1 generally easily to form a weak point, the bonding strength between the end portion 20 of the second-metal layer 2 and the first-metal post 1 is further improved, thereby reducing the risk of the second-metal layer 2 falling off.
in some embodiments, the end portion 20 of the second-metal layer 2 is a convex ring. The convex ring is sleeved on the first-metal post 1 and clamped between the first-metal post 1 and the terminal pressing block 102.
in some embodiments, the end portion 20 of the second-metal layer 2 is a convex sheet. A plurality of convex sheets are provided. The plurality of convex sheets are distributed at intervals around a peripheral side of the first-metal post 1. The convex sheets are clamped between the first-metal post 1 and the terminal pressing block 102.

In some embodiments, referring to FIGs. 1 to 8, the end portion 20 of the second-metal layer 2 is embedded in the first-metal post 1. Since the bonding between the end portion 20 of the second-metal layer 2 and the first-metal post 1 is generally easy to form a weak point, by embedding the end portion 20 of the second-metal layer 2 in the first-metal post 1, the bonding area between the end portion 20 of the second-metal layer 2 and the first-metal post 1 is increased, and the bonding strength is improved. In addition, the end portion 20 of the second-metal layer 2 is hidden inside the first-metal post 1, so as to reduce the risk of the end portion 20 of the second-metal layer 2 being scratched by external forces, thereby reducing the risk of the second-metal layer 2 peeling off.

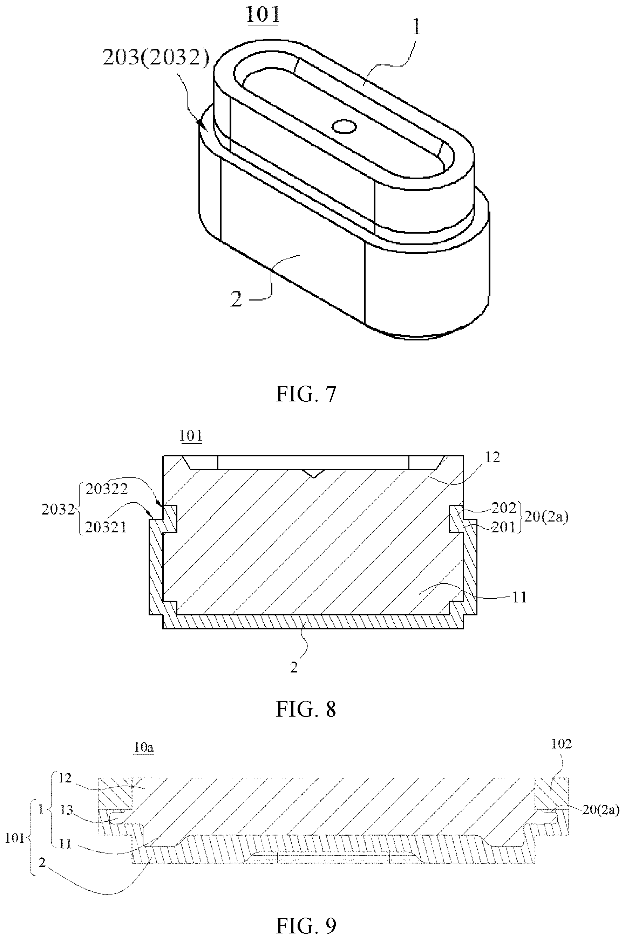

In some embodiments, referring to FIGs. 8 and 9, the first-metal post 1 is radially protruded to form a boss 13. Specifically, a part of the first-metal post 1 protrudes outward substantially along the radial direction of the first-metal post 1 to form the boss 13. As an example, an angular deviation between the boss 13 and the radial direction of the first-metal post 1 is within ±15°. The boss 13 is configured to support the terminal pressing block 102. It should be noted that the boss 13 and the terminal pressing block 102 are not necessarily in direct contact. The second-metal layer 2 extends to upper and lower sides of the boss 13. A surface of the boss 13 may be completely covered by the second-metal layer 2, or a part of the surface of the boss 13 may be covered by the second-metal layer 2. That is, the end portion 20 of the second-metal layer 2 may extend beyond the boss 13, or may be located on the upper side of the boss 13. Herein, the upper side of the boss 13 refers to a side surface of the boss 13 close to the second end 12, and the lower side of the boss 13 refers to a side surface of the boss 13 away from the second end 12. However, regardless of the relationship between the end portion 20 of the second-metal layer 2 and the boss 13, at least the clamping portion 2a is located on a side of the boss 13 facing the terminal pressing block 102.When the terminal pressing block 102 is supported on the boss 13, the clamping portion 2a is clamped between the terminal pressing block 102 and the boss 13 of the first-metal post 1.

The boss 13 may be located at the first end 11 of the first-metal post 1, or may be located at the second end 12 of the first-metal post 1, or may be located between the first end 11 and the second end 12 of the first-metal post 1. It may be understood that when the boss 13 is located at the first end 11 or the second end 12 of the first-metal post 1, the first-metal post 1 is sectioned along the axial direction of the first-metal post 1, and a section of the first-metal post 1 is in a straight T shape or an inverted T shape. When the boss 13 is located the first end 11 and the second end 12, the first-metal post 1 is sectioned along the axial direction of the first-metal post 1, and a section of the first-metal post 1 is in a "Chinese character ' 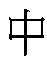 '-shaped".

For ease of description, the surface of the boss 13 close to the first end 11 is used as a bottom surface (i.e., a lower side), and the surface of the boss 13 away from the first end 11 is used as a top surface (i.e., an upper side).

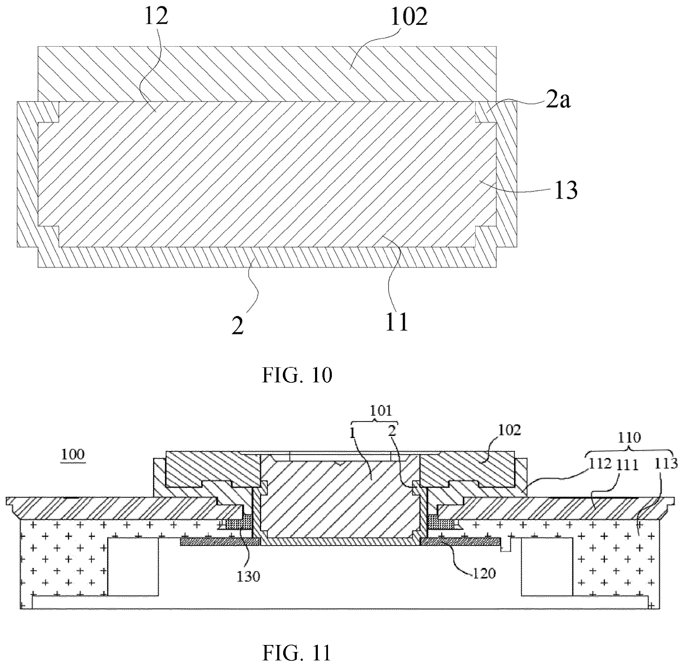

As an example, referring to FIG. 10, the boss 13 is located at the second end 12 of the first-metal post 1. The end portion 20 of the second-metal layer 2 extends to the top surface of the boss 13. The second-metal layer 2 does not cover the end surface of the second end 12. An outer surface of the end portion 20 of the second-metal layer 2 is flush with the end surface of the second end 12. The end surface of the second end 12 is exposed to form a welding region. The terminal pressing block 102 is supported on the boss 13. The end portion 20 of the second-metal layer 2(the end portion 20 serves as the clamping portion 2a) is clamped between the top surface of the boss 13 and a bottom surface of the terminal pressing block 102. A part of the bottom surface of the terminal pressing block 102 is welded with the welding region.

As an example, referring to FIG. 9, the boss 13 is located between the first end 11 and the second end 12 of the first-metal post 1. The end portion 20 of the second-metal layer 2 extends to the top surface of the boss 13. The terminal pressing block 102 is supported on the boss 13. The end portion 20 of the second-metal layer 2(the end portion 20 serves as the clamping portion 2a) is clamped between the top surface of the boss 13 and the bottom surface of the terminal pressing block 102. The terminal pressing block 102 is provided with a through hole 1021. The second end 12 of the first-metal post 1 extends into the through hole 1021 and is welded with an inner wall of the through hole 1021.

As an example, the boss 13 is located at the first end 11 of the first-metal post 1. The second-metal layer 2 completely covers the first end 11. The end portion 20 of the second-metal layer 2 extends to an outer side surface of the second end 12. The terminal pressing block 102 is supported on the boss 13. A part of the second-metal layer 2(the part is used as the clamping portion 2a, which is referred to as a first clamping portion for ease of distinguishing) is clamped between the top surface of the boss 13 and the bottom surface of the terminal pressing block 102. The terminal pressing block 102 is provided with a through hole 1021. The second end 12 of the first-metal post 1 extends into the through hole 1021 and is in interference fit with the through hole 1021. The end portion 20 of the second-metal layer 2(the end portion 20 is also used as the clamping portion 2a, which is referred to as a second clamping portion) is clamped between the inner wall of the through hole 1021 and the first-metal post 1.

It may be understood that one or more clamping portions 2a may be provided. For example, the clamping portion 2a may include only the first clamping portion, the clamping portion 2a may include only the second clamping portion, and the clamping portion 2a may further include the first clamping portion and the second clamping portion.
in some embodiments, processes of manufacturing the conductive module 10a may include: manufacturing the pole 101, pre-assembling the terminal pressing block 102 and the pole 101 together, so that the terminal pressing block 102 is supported on the boss 13 and a part of the second-metal layer 2 is located between the terminal pressing block 102 and the boss 13, pressing the terminal pressing block 102 toward the boss 13, and then connecting the terminal pressing block 102 and the pole 101 together.

In some embodiments, the clamping portion 2a is ring-shaped, and the clamping portion 2a is connected to a periphery portion of the first-metal post 1. The clamping portion 2a is provided to be ring-shaped, a contact area between the clamping portion 2a and a circumferential surface of the first-metal post 1 may be increased, the bonding area between the second-metal layer 2 and the first-metal post 1 may be increased, and the risk of the second-metal layer 2 falling off may be reduced. Furthermore, the difficulty of manufacturing the pole 101 may also be effectively reduced. Certainly, in other embodiments, the clamping portion 2a may also be provided with a plurality of convex sheets. The plurality of convex sheets are distributed at intervals around the periphery portion of the first-metal post 1. The convex sheets are clamped between the first-metal post 1 and the terminal pressing block 102.

According to a second aspect, referring to FIGs. 11 to 13, the embodiments of the present disclosure further provide a cover plate assembly 100. The cover plate assembly 100 is configured to match with a casing 1100 of a battery cell 1000 to form an enclosed accommodating cavity. The accommodating cavity is configured to accommodate the electrode assembly 1200 of the battery cell 1000.

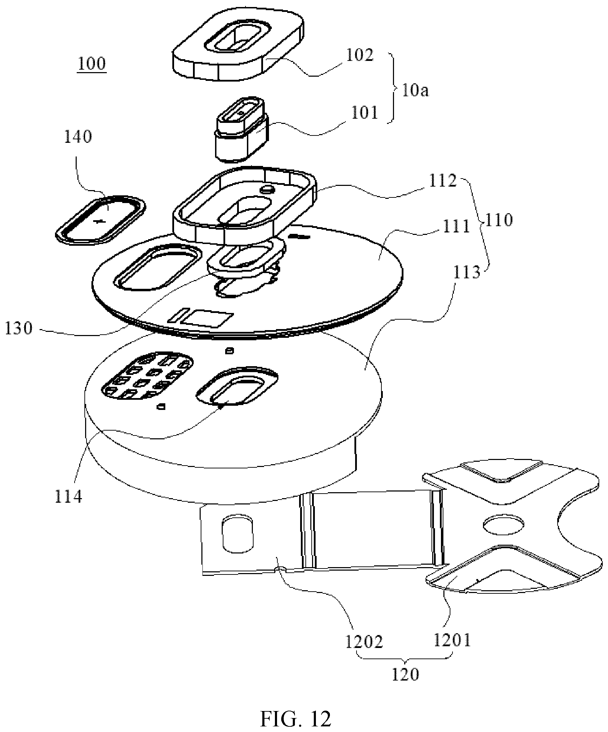

Specifically, referring to FIGs. 11 and 12, the cover plate assembly 100 includes a cover plate 110 and the aforementioned conductive module 10a. The conductive module 10a is connected to the cover plate 110. Specifically, the pole 101 in the conductive module 10a passes through the cover plate 110. The terminal pressing block 102 in the conductive module 10a is located on one side of the cover plate 110.

In detail, along a thickness direction of the cover plate 110, the cover plate 110 includes a first surface and a second surface opposite to each other. When the cover plate assembly 100 is mounted on the casing 1100 of the battery cell 1000, the first surface is a surface of the cover plate assembly 100 on a side away from the casing 1100, and the second surface is a surface of the cover plate assembly 100 on a side close to the casing 1100. The terminal pressing block 102 is located on the first surface of the cover plate 110. Along the thickness direction of the cover plate 110, a mounting hole 114 penetrating through the cover plate 110 is provided. The pole 101 passes through the cover plate 110 through the mounting hole 114.
in some embodiments, the cover plate assembly 100 further includes a current collector 120. The current collector 120 is a conductive component in the battery cell 1000 for connecting to a tab 1210 of the electrode assembly 1200. The current collector 120 is located on one side of the cover plate 110, specifically, on one side of the cover plate 110 away from the terminal pressing block 102. That is, the current collector 120 is located on the second surface of the cover plate 110. The current collector 120 is welded to the pole 101. Specifically, the current collector 120 is welded to the second-metal layer 2 on the pole 101. Optionally, a material of the current collector 120 is the same as a material of the second-metal layer 2, i.e., the material of the current collector 120 is the second metal, which can reduce the difficulty of welding the current collector 120 with the second-metal layer 2 and improve the reliability of welding.

In some embodiments, the current collector 120 includes at least one of a current collecting plate and a connecting sheet.

In some embodiments, the current collector 120 includes a current collector body 1201 and a connecting sheet 1202. The current collector body 1201 is connected to the connecting sheet 1202. The current collector body 1201 is configured to be connected to the tab 1210 of the electrode assembly 1200. The connecting sheet 1202 is welded to the pole 101.

In some embodiments, the cover plate 110 includes a cover plate body 111, a first insulating member 112, and a second insulating member 113. The first insulating member 112 and the second insulating member 113 are arranged on two opposite sides of the cover plate body 111, respectively. More specifically, the first insulating member 112 is disposed between the terminal pressing block 102 and the cover plate body 111, and the second insulating member 113 is disposed between the cover plate body 111 and the current collector 120. The cover plate 110 is provided with the mounting hole 114. The mounting hole 114 penetrates through the cover plate body 111, the first insulating member 112, and the second insulating member 113. As an example, the cover plate body 111 is a smooth aluminum sheet. The first insulating member 112 and the second insulating member 113 are both plastic members.

In some embodiments, the cover plate assembly 100 further includes a sealing member 130. The sealing member 130 is disposed between the cover plate 110 and the pole 101 to seal a gap between the pole 101 and the mounting hole 114, so as to prevent the electrolyte from leaking from the gap. As an example, the sealing member 130 is located between the cover plate body 111 and the second insulating member 113.

In some embodiments, processes of assembling the cover plate assembly 100 include following steps: aligning and stacking the second insulating member 113, the sealing member 130, the cover plate body 111, and the first insulating member 112 in sequence from bottom to top, passing the pole 101 of the conductive module 10a through the mounting hole 114 from top to bottom, abutting the terminal pressing block 102 of the conductive module 10 on the first insulating member 112, mounting the current collector 120 on a side of the second insulating member 113 away from the sealing member 130, and welding the current collector 120 and the pole 101 together by laser welding.

In some embodiments, the cover plate assembly 100 further includes an explosion-proof valve 140. The explosion-proof valve 140 is disposed on the cover plate 110.

In some embodiments, the cover plate 110 is further provided with a liquid injection hole 115 and a sealing structure (not shown in the figures) for sealing the liquid injection hole.

According to a third aspect, the embodiments of the present disclosure further provide a battery cell 1000. The battery cell 1000 is also referred to as a cell. The battery cell 1000 is a basic unit for implementing conversion between chemical energy and electrical energy.

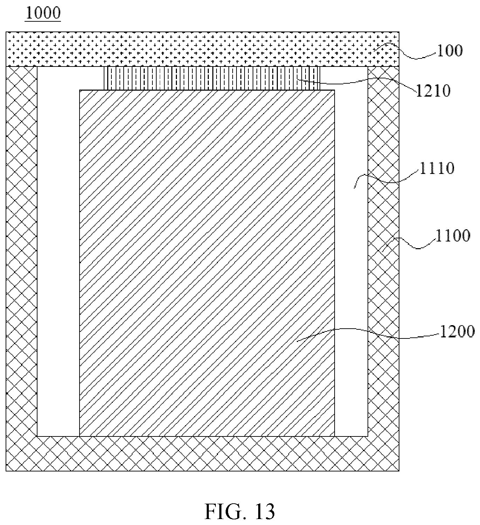

Specifically, referring to FIG. 13, the battery cell 1000 includes a casing 1100, an electrode assembly 1200, and the aforementioned cover plate assembly 100. Specifically, the casing 1100 includes an accommodating cavity 1110. The electrode assembly 1200 is disposed in the accommodating cavity 1110. The cover plate assembly 100 is connected to the casing 1100 and closes an opening of the accommodating cavity 1110. The electrode assembly 1200 includes a tab 1210. The pole 101 is connected to the tab 1210.

Specifically, the electrode assembly 1200 further includes electrode sheets and a separator. The tab 1210 is connected to the electrode sheets. The electrode sheets include a positive sheet and a negative sheet. The separator is located between the positive sheet and the negative sheet. It may be understood that the tab 1210 also includes a positive tab and a negative tab. The positive tab is connected to the positive sheet. The negative tab is connected to the negative sheet. Similarly, the pole 101 also includes a positive pole and a negative pole. The positive tab is connected to the positive pole. The negative tab is connected to the negative pole.

In addition, the battery cell 1000 further includes an electrolyte. The electrolyte is located in the accommodating cavity 1110. The electrode assembly 1200 is immersed in the electrolyte.

The embodiments of the present disclosure have been described in detail above, and the principles and embodiments of the present disclosure have been described herein by applying specific examples, and the description of the above embodiments is only for helping to understand the technical solutions of the present disclosure and the core ideas thereof. In addition, for those skilled in the art, there will be changes in the specific implementations and the scope of application based on the ideas of the present disclosure. In summary, the content of the description should not be understood as limiting the present disclosure.

## Claims

1. A conductive module (10a), **characterized in that** the conductive module (10a) comprises:
a pole (101) comprising a first-metal post (1) and a second-metal layer (2) bonded to a surface of the first-metal post (1), wherein the second-metal layer (2) comprises a clamping portion (2a); and
a terminal pressing block (102) connected to the pole (101), wherein the clamping portion (2a) is clamped between the first-metal post (1) and the terminal pressing block (102).

2. The conductive module (10a) according to claim 1, **characterized in that** the terminal pressing block (102) is provided with a through hole (1021), and the terminal pressing block (102) is sleeved on the pole (101) through the through hole (1021).

3. The conductive module (10a) according to claim 2, **characterized in that** the through hole (1021) is in interference fit with the pole (101);
optionally, the terminal pressing block (102) is fixed to the pole (101) by press riveting.

4. The conductive module (10a) according to claim 2, **characterized in that** the clamping portion (2a) is clamped between the first-metal post (1) and at least a part of a hole wall (1022) of the through hole (1021);
optionally, a part of the hole wall (1022) of the through hole (1021) is in direct contact with the first-metal post (1).

5. The conductive module (10a) according to any one of claims 2 to 4, **characterized in that** a hole wall (1022) of the through hole (1021) is welded to the pole (101); and/or
wherein the terminal pressing block (102) is sleeved on the first-metal post (1) through the through hole (1021).

6. The conductive module (10a) according to any one of claims 2 to 4, **characterized in that** the second-metal layer (2) comprises a support surface (203), and the terminal pressing block (102) is supported on the support surface (203).

7. The conductive module (10a) according to claim 6, **characterized in that** the support surface (203) is an inclined surface (2031), and along a direction away from a first end (11) of the first-metal post (1), the inclined surface (2031) gradually approaches an outer side surface of the first-metal post (1) from an outer side surface of the second-metal layer (2);
optionally, the inclined surface (2031) is an inclined flat surface, and an included angle between the inclined flat surface and the outer side surface of the second-metal layer (2) ranges from 110° to 130°.

8. The conductive module (10a) according to claim 6, **characterized in that** the support surface (203) is a step surface (2032), the step surface (2032) comprises at least one first sub-step surface (20321) and at least one second sub-step surface (20322) connected in sequence;
optionally, a height of the second sub-step surface (20322) is greater than or equal to 0.2 mm along an axial direction of the pole (101), and/or a width of the first sub-step surface (20321) is greater than or equal to 0.2 mm along a radial direction of the pole (101).

9. The conductive module (10a) according to claim 6, **characterized in that** along a radial direction of the pole (101), a width of the support surface (203) is greater than or equal to 0.3 mm and less than or equal to an average thickness of the second-metal layer (2); and/or
wherein a hole wall (1022) of the through hole (1021) is formed with a fitting surface (1023) matching the support surface (203); and/or
wherein the support surface (203) is formed on the clamping portion (2a).

10. The conductive module (10a) according to any one of claims 1 to 4, **characterized in that** the first-metal post (1) is radially protruded to form a boss (13), the boss (13) is configured to support the terminal pressing block (102), the second-metal layer (2) extends to upper and lower sides of the boss (13), and the clamping portion (2a) is clamped between the boss (13) and the terminal pressing block (102).

11. The conductive module (10a) according to any one of claims 1 to 4, **characterized in that** an end portion (20) of the second-metal layer (2) is embedded in the first-metal post (1); and/or
wherein an end portion (20) of the second-metal layer (2) is the clamping portion (2a); and/or
wherein the clamping portion (2a) is provided to be ring-shaped, and the clamping portion (2a) is connected to a peripheral portion of the first-metal post (1).

12. The conductive module (10a) according to any one of claims 1 to 4, **characterized in that** a material of the terminal pressing block (102) is the same as a material of the first-metal post (1); and/or, wherein the first-metal post (1) is an aluminum post, and the second-metal layer (2) is a copper layer; and/or wherein an average thickness of the second-metal layer (2) is less than or equal to 3 mm; and/or
wherein the first-metal post (1) comprises a first end (11) and a second end (12) opposite to each other, the second-metal layer (2) wraps a surface of the first end (11) and extends toward the second end (12), a portion of the second-metal layer (2) corresponding to the first end (11) is configured to be connected to an electrode assembly (1200), and the second end (12) is connected to the terminal pressing block (102).

13. A cover plate assembly (100), **characterized in that** the cover plate assembly (100) comprises:
a cover plate (110); and
the conductive module (10a) according to any one of claims 1 to 12, wherein the pole (101) passes through the cover plate (110), and the terminal pressing block (102) is located on one side of the cover plate (110);

14. The cover plate assembly (100) according to claim 13, **characterized in that** the cover plate assembly (100) further comprises:
a current collector (120) located on a side of the cover plate (110) away from the terminal pressing block (102) and welded to the pole (101), wherein the cover plate (110) comprises:
a cover plate body (111);
a first insulating member (112) disposed between the terminal pressing block (102) and the cover plate body (111);
a second insulating member (113) disposed between the cover plate body (111) and the current collector (120); and/or
a sealing member (130) disposed between the cover plate (110) and the pole (101).

15. A battery cell (1000), **characterized in that** the battery cell (1000) comprises:
a casing (1100) comprising an accommodating cavity (1110);
an electrode assembly (1200) disposed in the accommodating cavity (1110), wherein the electrode assembly (1200) comprises a tab (1210); and
the cover plate assembly (100) according to any one of claims 13 to 14, wherein the cover plate assembly (100) is connected to the casing (1100) and closes an opening of the accommodating cavity (1110), and the pole (101) is connected to the tab (1210).
